# EUROPÄISCHE PATENTSCHRIFT

(11) **EP 2 180 672 B1**
(45) Veröffentlichungstag und Bekanntmachung des Hinweises auf die Patenterteilung: **24.01.2018**
(21) Anmeldenummer: 09013400.8
(22) Anmeldetag: 23.10.2009
(51) Int. Cl.: H04M 1/60, H04B 1/3822

(54) **Mobilgerätsystem für ein Kraftfahrzeug**
Mobile device system for a motor vehicle
Système d'appareil mobile pour véhicules automobiles

(30) Priorität: 23.10.2008 DE 102008052861
(43) Veröffentlichungstag der Anmeldung: 28.04.2010
(73) Patentinhaber: Volkswagen Aktiengesellschaft, 38440 Wolfsburg (DE); Bury GmbH & Co. KG, 32584 Löhne (DE)
(72) Erfinder: Gring, Joachim, 31311 Uetze (DE); Feldmann, Bernd, 31303 Burgdorf (DE); Flörke, Thomas, 32257 Bünde (DE); Uteschil, matthias, 38444 Wolfsburg (DE)

(56) Entgegenhaltungen:
- EP-A1- 1 473 913
- EP-A1- 1 718 047
- DE-A1-102005 030 458
- DE-U1- 20 310 288
- US-A1- 2004 209 655

## Beschreibung

Die Erfindung betrifft ein Mobilgerätsystem für ein Kraftfahrzeug gemäß dem Oberbegriff der unabhängigen Patentansprüche 1 und 13 sowie einen Adapter für ein Mobilgerätsystem gemäß dem Oberbegriff der unabhängigen Patentansprüche 9 und 15.

Die DE 20 2006 016 959 U1 offenbart eine Schnittstelle mit einem Eingang für ein erstes Signal eines Mobiltelefons, einer Einrichtung zum Wandeln des ersten Signals in ein Hochfrequenzsignal und einer Antenne zum Senden des Hochfrequenzsignals für den Empfang durch ein Rundfunkgerät, wobei der Eingang eine Antenne zum Empfang des ersten Signals über Bluetooth ist. Darüber hinaus offenbart die Zeitschrift dialog 4/2008 auf den Seiten 56 bis 57 einen Bluetooth-Adapter. Eine Bluetooth-Freisprecheinrichtung ist unter der Volkswagenartikelnummer 000 051 433 C erwerbbar.

Die EP 0 760 188 B1 offenbart eine Vorrichtung zur Verwendung mit einem vorbestimmten ersten Mobiltelefon einer Mehrzahl von unterschiedlichen Typen von Mobiltelefonen, wobei die Vorrichtung einen ersten von dem ersten Mobiltelefon getrennten Taschenadapter sowie eine gemeinsame, von dem Taschenadapter getrennte, Basiseinheit aufweist, wobei der Taschenadapter einen Empfangsabschnitt zur Verwendung bei einem Halten des ersten Telefons, eine elektrische Schnittstelle, eine Verbindungsanordnung zum elektrischen Verbinden des ersten Telefons mit der elektrischen Schnittstelle und ein Gerät zum Speichern von Informationen, die auf eine Identität des ersten Mobiltelefons bezogen sind, umfasst.

Weitere Vorrichtungen ähnlicher Anwendung oder weitere Telefonvorrichtungen offenbaren die US 5 127 041, die US 5 189 358, die US 4 782 526, die US 4 939 770, die US 5 333 177, die US 5 189 358, die DE 41 07 995, die EP 0 455 252, die WO 94/24775, die US 5 081 667, die US 4 718 080, die EP 0 494 780, die EP 0 617 535, die DE 693 21 859, die EP 0 559 187, die US 5 020 090, die EP 0 449 471, die US 4 876 712, die US 4 972 470, die JP 62 42347, MORRISON & DEMPSEY COMMUNICATIONS: "AB3X Cellular Interface OWNER'S MANUAL, November 1987 (1987-11) sowie OKI: TECHNICAL REVIEW, vol. 56, April 1989 (1989-04), Seiten 3 bis 10.

Kraftfahrzeuge mit einer Telefonbedienvorrichtung zur Bedienung eines Mobiltelefons mittels einer drahtlosen Kommunikationsverbindung zwischen der Telefonbedienvorrichtung und dem Mobiltelefon sind z. B. aus der DE 10 2005 058 636 A1 und der WO 2004/038887 A1 bekannt. Weitere Aufladevorrichtungen sind aus der WO 03/105308 A1, der WO 02/095555 A2, der WO 2004/038888 A1, der WO 03/09636 A1, der WO 2004/030176 A2, der EP 1 198 165 A2 und der EP 0 872 032 B1 bekannt.

Die DE 203 10 288 U1 offenbart eine Freisprecheinrichtung für Mobiltelefone in einem Fahrzeug, insbesondere einem PKW, mit einem im Fahrzeugort fest anzuordnenden Aufnahmehalter, der einerseits elektrisch mit einer im Fahrzeug installierten, an der betreffenden Fahrzeugschnittstelle angeschlossenen Elektronikeinheit zu verbinden ist und andererseits einen Steckverbinder zur elektrischen und mechanischen Verbindung mit an unterschiedliche Mobiltelefone angepassten Telefonhaltern aufweist, wobei ein Bluetooth-Adapter mit einem integrierten Steckverbinder zum elektrischen und mechanischen Ankuppeln an den Steckverbinder des Aufnahmehalters vorgesehen ist.

Die EP 1 473 913 A1 offenbart eine Bedienvorrichtung zur Fernbedienung eines Telefons, wobei die Bedienvorrichtung zur Eingabe von Telefonsteuersignalen ausgestaltet ist und ein Display zur Ausgabe visueller Informationen aufweist. Zudem ist eine Kommunikationseinrichtung für eine Nah-Drahtlos-Kommunikation vorgesehen. Mittels einer Schaltung werden die Ein- und Ausgangssignale der Bedienvorrichtung derart gewandelt, dass sie dieselben Eigenschaften wie die korrespondierenden Signale eines Telefons aufweisen.

Die EP 1 718 047 A1 offenbart eine Freisprechanlage für Mobiltelefone mit einer eine Kontakteinheit aufweisenden Halterung, die über die Kontakteinheit eine Verbindung zu einem Mobiltelefon herstellen kann und mit einer Zentraleinrichtung verbunden ist, an die externe Einrichtungen anschließbar sind. In der Halterung ist ein Steuergerät einsetzbar, das eine Erkennungseinrichtung für SIM-Daten des Mobiltelefons und eine eigene Telefonsende- und -empfangseinheit aufweist und über die Kontakteinheit der Halterung mit einer Stromversorgung und mit den an die Zentraleinrichtung anschließbaren externen Einrichtungen verbindbar ist.

Es ist Aufgabe der Erfindung, eine kostengünstige Alternative zur Benutzung eines Mobilgeräts in einem Kraftfahrzeug bereitzustellen.

Vorgenannte Aufgabe wird durch ein Mobilgerätsystem für ein Kraftfahrzeug mit einer kraftfahrzeugseitigen Universalschnittstelle zum zumindest mechanischen Verbinden zumindest eines ersten Adapters mit dem Kraftfahrzeug gelöst, wobei der mindestens erste Adapter zum zumindest mechanischen Verbinden eines Mobilgeräts eines vorgegebenen oder vorgebbaren Mobilgerätetyps mit der Universalschnittstelle ausgestaltet ist, und wobei das Mobilgerätsystem einen mit der Universalschnittstelle mechanisch verbindbaren Adapter zur drahtlosen Kommunikation mit zumindest einem Mobilgerät aufweist, mittels dessen ein Mobilgerät aus einer Mehrzahl von unterschiedlichen Typen von Mobilgeräten über eine bluetoothartige Verbindung bedienbar ist oder bedient wird und/oder mit der Universalschnittstelle verbindbar oder verbunden ist, wobei der Adapter, der zur drahtlosen Kommunikation mit zumindest einem Mobilgerät dient, mit dem Kraftfahrzeug bzw. dessen Steuergerät bzw. Mobilgerätsteuerung mittels einer zweiten bluetoothartigen Verbindung verbindbar oder verbunden ist. Ein erster Adapter im Sinne der Erfindung ist insbesondere derart ausgestaltet, dass er ein Mobilgerät eines vorgegebenen oder vorgebbaren Mobilgerätetyps, insbesondere von vier oder fünf Seiten, umschließt. Vorteilhafterweise ist die Bedien- und Anzeigeoberfläche des Mobilgeräts frei zugänglich. Ein erster Adapter im Sinne der Erfindung ist insbesondere als Cradle ausgestaltet.

Die Verbindung des ersten Adapters und/oder des Adapters, der zur drahtlosen Kommunikation mit zumindest einem Mobilgerät dient, mit der Universalschnittstelle kann zusätzlich eine elektrische Verbindung umfassen. Ein elektrisches Verbinden im Sinne der Erfindung kann bedeuten, dass der Adapter bzw. ein Mobilgerät über den Adapter an die Energieversorgung des Kraftfahrzeuges, an eine Freisprecheinrichtung des Kraftfahrzeuges und/oder eine Antenne des Kraftfahrzeuges angebunden ist.

Eine bluetoothartige Verbindung im Sinne der Erfindung ist insbesondere eine Kommunikationsverbindung entsprechend dem Bluetooth-Standard. Eine bluetoothartige Verbindung im Sinne der Erfindung kann jedoch auch eine drahtlose Kommunikationsverbindung mit ähnlichen Eigenschaften wie der Bluetooth-Standard oder eine drahtlose Kommunikationsverbindung kurzer Reichweite sein. Unter kurzer Reichweite ist dabei insbesondere zu verstehen, dass die Reichweite sich auf das Kraftfahrzeug bzw. dessen nächste Umgebung beschränkt.

In vorteilhafter Ausgestaltung der Erfindung umfasst das Mobilgerätsystem eine kraftfahrzeugseitige Freisprecheinrichtung, die mittels des Adapters zur drahtlosen Kommunikation mit zumindest einem Mobilgerät zum Telefonieren mit dem zumindest einen Mobilgerät nutzbar ist oder genutzt wird. In weiterhin vorteilhafter Ausgestaltung der Erfindung umfasst die Freisprecheinrichtung einen kraftfahrzeugseitigen Lautsprecher und/oder ein kraftfahrzeugseitiges Mikrofon. In weiterhin vorteilhafter Ausgestaltung der Erfindung ist ein Mobilgerät mittels des Adapters, der zur drahtlosen Kommunikation mit zumindest einem Mobilgerät dient, automatisch mit der Freisprecheinrichtung verbindbar und/oder ein Mobilgerät wird mittels des Adapters, der zur drahtlosen Kommunikation mit zumindest einem Mobilgerät dient, automatisch mit der Freisprecheinrichtung verbunden. Dabei können einige oder alle der folgenden Schritte ersetzt oder automatisch durchgeführt werden:
1.) Innerhalb von 5 Minuten die Info-Taste gefolgt von der Pannentaste drücken
2.) Quittungston abwarten
3.) Über Mobilgerät verfügbare Bluetoothgeräte suchen
4.) Universalschnittstelle am Mobilgerät auswählen
5.) Pin eingeben (Standard 0000)
6.) Automatisches Wiederverbinden am Mobilgerät bestätigen.

Es kann vorteilhafterweise vorgesehen sein, dass die zweite bluetoothartige Verbindung zwischen dem Adapter, der zur drahtlosen Kommunikation mit zumindest einem Mobilgerät dient, und der Freisprecheinrichtung bzw. dem Kraftfahrzeug bzw. dessen Mobilgerätesteuerung automatisch aufgebaut wird, wenn beide Geräte eingeschaltet sind. Ist z.B. der Adapter zur drahtlosen Kommunikation mit zumindest einem Mobilgerät eingeschaltet während das Kraftfahrzeug gestartet wird, baut sich die bluetoothartige Verbindung zwischen dem Adapter, der zur drahtlosen Kommunikation mit zumindest einem Mobilgerät dient, und der Freisprecheinrichtung bzw. dem Kraftfahrzeug bzw. dessen Steuergerät auf. Es ist insbesondere vorgesehen, dass mittels der ersten bluetoothartigen Verbindung und der zweiten bluetoothartigen Verbindung Daten zur gleichen Zeit übertragbar sind oder übertragen werden. In weiterhin vorteilhafter Ausgestaltung der Erfindung weist der Adapter zur drahtlosen Kommunikation mit zumindest einem Mobilgerät eine erste bluetoothartige Schnittstelle und zumindest eine zweite bluetoothartige Schnittstelle auf. Die erste bluetoothartige Schnittstelle und die zweite bluetoothartige Schnittstelle sind vorteilhafterweise unterhalb der Anwendungsschicht ein und dieselbe Schnittstelle, jedoch in der Anwendungsschicht zwei Schnittstellen. Eine bluetoothartige Schnittstelle im Sinne der Erfindung ist insbesondere eine Schnittstelle, die eine bluetoothartige Verbindung im Sinne der Erfindung ermöglicht.

In weiterhin vorteilhafter Ausgestaltung der Erfindung umfasst der Adapter zur drahtlosen Kommunikation mit zumindest einem Mobilgerät ein Display und vorteilhafterweise einen über dem Display angeordneten Touchscreen, wobei vorteilhafterweise vorgesehen ist, dass mittels des Touchscreens zumindest eine Funktion des Mobilgeräts anzeigbar ist oder angezeigt wird und/oder auswählbar ist oder ausgewählt wird und/oder aus einer mittels des Displays dargestellten Liste auswählbar ist oder ausgewählt wird. In weiterhin vorteilhafter Ausgestaltung der Erfindung ist mittels des Displays ist eine von einem Mobilgerät empfangene Textnachricht anzeigbar.

In weiterhin vorteilhafter Ausgestaltung der Erfindung ist vorgesehen, dass mittels des Displays eine Statusanzeige anzeigbar ist. Eine Statusanzeige im Sinne der Erfindung kann insbesondere
- anzeigen, dass eine bluetoothartige Verbindung zwischen dem Adapter, der zur drahtlosen Kommunikation mit zumindest einem Mobilgerät dient, und einem Mobilgerät besteht,
- anzeigen, dass eine bluetoothartige Verbindung zwischen dem Adapter, der zur drahtlosen Kommunikation mit zumindest einem Mobilgerät dient, und dem Kraftfahrzeug bzw. dessen Mobilgerätsteuergerät besteht,
- die Signalstärke des Mobilgeräts anzeigen,
- den Füllstand eines Akkus des Mobilgeräts anzeigen,
- den Füllstand eines Akkus des Adapters, der zur drahtlosen Kommunikation mit zumindest einem Mobilgerät dient, anzeigen,
- den Provider/Anbieter anzeigen, über den das Mobilgerät betrieben wird,
- anzeigen, dass eine Kurznachricht, wie Short Message Service (SMS), oder Nachrichten mit multimedialem.Inhalt, wie Multimedia Messaging Service (MMS), oder eine E-Mail oder eine andere Nachricht, insbesondere Textnachricht, empfangen wurde und/oder
- anzeigen, dass ein Anruf verpasst wurde.

In beispielhafter Ausgestaltung der Erfindung weist der Adapter zur drahtlosen Kommunikation mit zumindest einem Mobilgerät ein Spracherkennungssystem zur akustischen Eingabe von Befehlen zur Steuerung des Adapters bzw. des Mobilgeräts auf. Dabei ist insbesondere vorgesehen, dass der Adapter zumindest ein erstes Mikrofon, vorteilhafterweise zumindest jedoch auch ein zweites Mikrofon, umfasst.

Gemäß einer Option kann vorgesehen sein, dass die Sprachbedienung sprecherunabhängig erfolgen kann, so dass kein Training notwendig ist. Es kann jedoch auch eine Trainingsoption angeboten werden. Gemäß einer weiteren Option kann vorgesehen sein, dass mehrere Sprachkommandos ohne Pausen eingegeben werden können. So kann zum Beispiel der Befehl "Max Mustermann mobil anrufen" zusammenhängend gesprochen eingegeben werden, wobei die Spracherkennung den Befehl "anrufen" ebenso separiert, wie die Kategorie "mobil" und die Information in Bezug auf den gewünschten Teilnehmer, das heißt "Max Mustermann". Alternativ kann die Eingabe auch ohne eine Kategorie erfolgen, wobei das System in einem folgenden Schritt die vorhandenen Nummern mit den Kategorieinformationen abfragt.

Gemäß einer weiteren Option kann vorgesehen sein, dass sich die Spracherkennung automatisch dem Sprecher und der Umgebung (Hintergrundgeräusche) anpasst. Dies erfolgt insbesondere unter Verwendung mindestens eines weiteren Mikrofons.

In einer weiteren Option kann vorgesehen sein, dass eine automatische Erkennung von Telefonbuchnamen durch eine Grapheme-to-phoneme-Funktion erfolgt. Einzelheiten einer Grapheme-to-phoneme-Funktion können z.B. dem auf der Internetseite www.speech.kth.se/prod/publications/files/qpsr/2002/02-44-117-120.pdf veröffentlichten Artikel 'Grapheme-to-phoneme conversion, a knowledge-based approach' von Niklas Torstensson, Dept. of Languages, Högskolan i Skövde, auch veröffentlicht in der Zeitschrift 'Proceedings of Fonetik', TMH-QPSR Vol. 44 - Fonetik 2002, S. 117 -120, entnommen werden.

In einer weiteren Option kann vorgesehen sein, dass die Aufnahme und Erkennung von Sprachaufnahmen (Voice Tags) verknüpft mit einem Telefonbucheintrag erfolgt. In einer weiteren Option kann vorgesehen sein, dass eine Auswahl oder alle Menüs per Sprache bedienbar sind. Dabei ist jedoch insbesondere vorgesehen, dass Musikmenüs und Menüs während eines aktiven Anrufs nicht bedienbar sind. Es kann in einer weiteren Option vorgesehen sein, dass die Aktivierung der Sprachsteuerung erst durch die Eingabe eines Schlüsselwortes erfolgt.

Es kann in einer weiteren Option vorgesehen werden, dass Hilfen über mögliche Kommandos in jedem Menü per Sprache aufgerufen werden können. Diese Hilfe wird insbesondere dynamisch generiert, so dass dem Benutzer immer nur die derzeit aktiven Kommandos aufgezählt werden. In einer weiteren Option kann vorgesehen sein, dass die wichtigsten Sprachkommandos für jedes Menü im Display angezeigt werden, um dem Benutzer die Navigation per Sprache visuell zu erleichtern.

In einer weiteren Option kann vorgesehen sein, dass während der Sprachbedienung per text-to-speech dem Benutzer Hilfen gegeben und die Navigation im Menü erleichtert wird. Dabei sind insbesondere zwei Hilfelevel vorgesehen:
- erweiterte Hitfe (sehr detaillierte Informationen für neue Benutzer)
- ohne erweiterte Hilfe (nur wichtigste Informationen für erfahrene Benutzer).

In einer weiteren Option kann vorgesehen sein, dass, wenn nach einer definierten Zeit kein Sprachkommando eingegeben wird, das System an die Eingabe eines Kommandos erinnert. Beim zweiten Mal werden die möglichen Kommandos aufgezählt und beim dritten Mal wird der Dialog abgebrochen.

In einer weiteren Option kann vorgesehen sein, dass Rufnummern im Ganzen ohne Pause eingegeben werden können sowie auch einzeln oder in Blöcken. In einer weiteren Option kann vorgesehen sein, dass die Eingabe von Buchstaben oder Natocode zur Schnellsuche im Telefonbuch erfolgen kann.

In einer weiteren Option kann vorgesehen sein, dass der Adapter einen Anrufernamen akustisch ausgibt, wenn ein Anruf eingeht. In einer weiteren Option kann vorgesehen sein, dass der Inhalt einer SMS oder einer E-Mail akustisch durch den Adapter ausgegeben wird. In einer weiteren Option kann vorgesehen sein, dass die Einträge in Anruflisten akustisch durch den Adapter ausgegeben werden können. In einer weiteren Option kann vorgesehen sein, dass der Inhalt eines Telefonbuchs mittels des Adapters akustisch ausgegeben wird.

In einer weiteren Option kann vorgesehen sein, dass ein akustisches Feedback während der Bedienung des Touchscreens aktiviert werden kann. Bei Aktivierung dieser Funktion wird einem Bediener akustisch ausgegeben, welche Bedienung er gerade mittels des Touchscreens vorgenommen hat. In einer weiteren Option kann vorgesehen sein, dass Rufnummern akustisch ausgegeben werden.

In weiterhin vorteilhafter Ausgestaltung der Erfindung ist die Universalschnittstelle als Haltevorrichtung für den zumindest ersten Adapter und den Adapter, der zur drahtlosen Kommunikation mit zumindest einem Mobilgerät dient, ausgestaltet. In weiterhin vorteilhafter Ausgestaltung der Erfindung ist die Universalschnittstelle neben dem Lenkrad des Kraftfahrzeuges angeordnet. In weiterhin vorteilhafter Ausgestaltung der Erfindung ist die Universalschnittstelle am Armaturenbrett des Kraftfahrzeuges angeordnet.

Vorgenannte Aufgabe wird zudem durch ein Verfahren zum Betrieb eines vorgenannten Mobilgerätsystems gelöst. Dabei ist insbesondere vorgesehen, dass zwischen einem Mobilgerät aus einer Mehrzahl von unterschiedlichen Typen von Mobilgeräten und dem Adapter, der zur drahtlosen Kommunikation mit zumindest einem Mobilgerät dient, mittels einer ersten bluetoothartigen Verbindung Daten übertragen werden. Weiterhin werden zwischen dem Adapter, der zur drahtlosen Kommunikation mit zumindest einem Mobilgerät dient, und dem Kraftfahrzeug bzw. einer Mobilgerätesteuerung des Kraftfahrzeuges Daten mittels einer zweiten bluetoothartigen Verbindung übertragen. Dabei ist insbesondere vorgesehen, dass die erste bluetoothartige Verbindung und die zweite bluetoothartige Verbindung (zumindest zeitweise) zur gleichen Zeit bestehen. Vorgenannte Aufgabe wird zudem durch einen Adapter für ein Mobilgerätsystem gelöst, wobei das Mobilgerätsystem eine kraftfahrzeugseitige Universalschnittstelle zum zumindest mechanischen Verbinden des Adapters mit dem Kraftfahrzeug aufweist, wobei der Adapter mit zumindest einem Mobilgerät aus einer Mehrzahl von unterschiedlichen Typen von Mobilgeräten über eine erste bluetoothartige Verbindung verbindbar ist oder verbunden ist und/oder bedienbar ist oder bedient wird. Dabei umfasst der Adapter eine erste bluetoothartige Schnittstelle, die der ersten bluetoothartigen Verbindung zugeordnet ist, und eine zweite bluetoothartige Schnittstelle, die einer zweiten bluetoothartigen Verbindung zugeordnet ist, wobei der Adapter mit dem Kraftfahrzeug mittels der zweiten bluetoothartigen Verbindung verbindbar oder verbunden ist. Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Ein Mobilgerät im Sinne der Erfindung ist insbesondere ein Mobiltelefon, ein tragbarer. Computer, wie z. B. ein Personal Digital Assistant (PDA), aber auch weitere Mobilgeräte werden von der Erfindung umfasst.

Eine Funktion im Sinne der Erfindung kann beispielsweise das Wählen einer Telefonnummer aber auch weitere Funktionen umfassen, die zur Steuerung des Mobilgeräts und/oder des Adapters dienen. Dazu zählen auch Funktionen zum Verändern von Parametern des Mobilgeräts oder des Adapters,

Weitere Vorteile und Einzelheiten ergeben sich aus der nachfolgenden Beschreibung von Ausführungsbeispielen. Dabei zeigen:
- Fig. 1: ein Ausführungsbeispiel eines Kraftfahrzeuges in einer Prinzipdarstellung,
- Fig. 2: ein Ausführungsbeispiel eines Mobilgerätsystems in einer Prinzipdarstellung,
- Fig. 3: einen Adapter zur drahtlosen Kommunikation mit zumindest einem Mobilgerät in einer Universalschnittstelle,
- Fig. 4.: einen Adapter zur drahtlosen Kommunikation mit zumindest einem Mobilgerät in einer Prinzipdarstellung,
- Fig. 5: ein Ausführungsbeispiel für ein Hauptmenü eines Adapters zur drahtlosen Kommunikation mit zumindest einem Mobilgerät,
- Fig. 6: ein Ausführungsbeispiel für ein Untermenü eines Adapters zur drahtlosen Kommunikation mit zumindest einem Mobilgerät,
- Fig. 7: ein weiteres Ausführungsbeispiel für ein Untermenü eines Adapters zur drahtlosen Kommunikation mit zumindest einem Mobilgerät und
- Fig. 8: eine Meldung nach erfolgreicher automatischer Herstellung einer Bluetoothartige Verbindung:

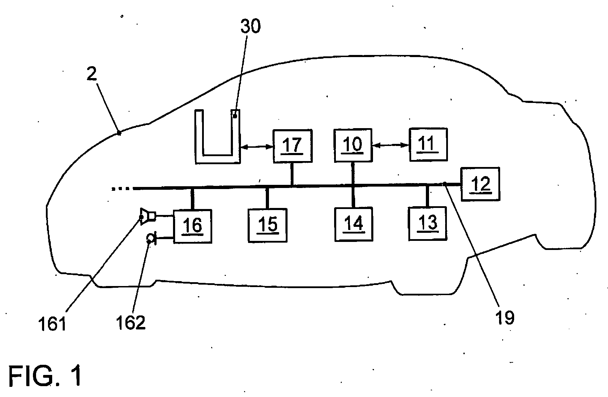

Fig. 1 zeigt ein Kraftfahrzeug 2 in einer Prinzipdarstellung. Das Kraftfahrzeug 2 umfasst eine Anzeige- und Bedienvorrichtung 11, die über eine Anzeige- und Bediensteuerung 10 ansteuerbar ist. Mittels der Anzeige- und Bedienvorrichtung 11 sind zum Beispiel ein Navigationssystem 12, eine Klimaautomatik 13, ein CD-Spieler 14 und ein Radio 15 bedienbar, die mittels eines Bussystems 19 mit der Anzeige- und Bediensteuerung 10 verbunden sind. Darüber hinaus dient die Anzeige- und Bedienvorrichtung 11 der Bedienung eines Mobilgeräts. Dazu umfasst das Kraftfahrzeug 2 eine Mobilgerätsteuerung 17, die über das Bussystem 19 datentechnisch mit der Anzeige- und Bediensteuerung 10 verbunden ist, und eine Universalschnittstelle 30, die mit der Mobilgerätsteuerung 17, mit einer nicht dargestellten kraftfahrzeugseitigen Energieversorgung und/oder mit einer nicht dargestellten kraftfahrzeugseitigen Antenne verbunden sein kann. Das Kraftfahrzeug umfasst weiterhin eine Freisprecheinrichtung 16 mit einem Mikrofon 162 und einem Lautsprecher 161. Die Freisprecheinrichtung 16 ist über das Bussystem 19 bzw. die Mobilgerätsteuerung 17 datentechnisch (und elektrisch) mit der Universalschnittstelle 30 verbunden. Die Mobilgerätsteuerung 17 und die Freisprecheinrichtung 16 können in einem Gerät integriert sein bzw. als ein Gerät ausgestaltet sein. In diesem Sinne kann die Freisprecheinrichtung 16 Teil der Mobilgerätsteuerung 17 sein.

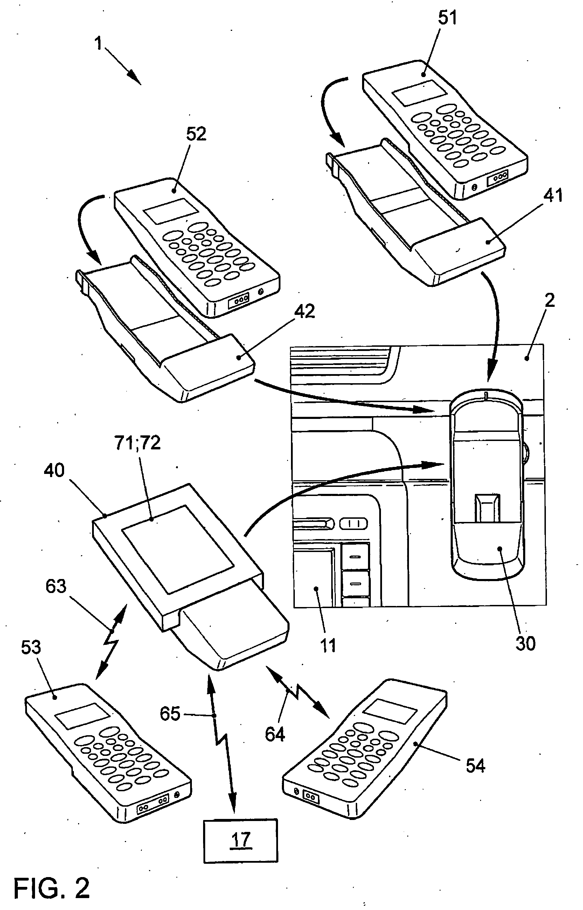

Die Universalschnittstelle 30 ist-wie in Fig. 2 dargestellt - als Halterung ausgestaltet und am Armaturenbrett des Kraftfahrzeugs 2 neben dessen Lenkrad bzw. neben der Anzeige- und Bedienvorrichtung 11 angebracht. Die Universalschnittstelle 30 und die Freisprecheinrichtung 16 sind Teil eines in Fig. 2 dargestellten Mobilgerätsystems. Das Mobilgerätsystem 1 umfasst zudem einen als Cradle ausgestalteten Adapter 41, in den ein Mobilgerät 51 eines vorgegebenen oder vorgebbaren Mobilgerättyps einfügbar ist. Zusammen mit dem Adapter 41 kann das Mobilgerät 51 in die Universalschnittstelle 30 eingesteckt und so mit diesem bzw. mit dem Kraftfahrzeug 2 und/oder der Freisprecheinrichtung 16 und/oder mit einer kraftfahrzeugseitigen Energieversorgung und/oder Antenne elektrisch verbunden werden.

Das Mobilgerätsystem 1 umfasst darüber hinaus einen als Cradle ausgestalteten Adapter 42, in den ein Mobilgerät eines vorgegebenen oder vorgebbaren Mobilgerättyps einfügbar ist. Zusammen mit dem Adapter 42 kann das Mobilgerät 52 in die Universalschnittstelle 30 eingesteckt und so mit diesem bzw. mit dem Kraftfahrzeug 2 und/oder Freisprecheinrichtung 16 und/oder mit einer kraftfahrzeugseitigen Energieversorgung und/oder Antenne elektrisch verbunden werden.

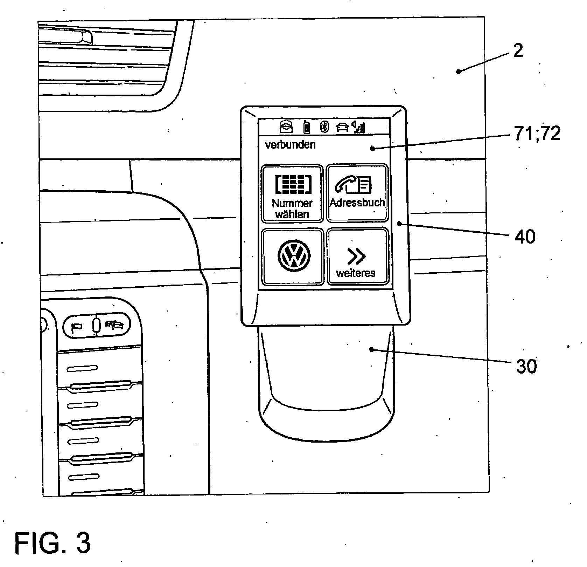

Außerdem umfasst das Mobilgerätsystem 1 einen Adapter 40 zur drahtlosen Kommunikation mit zumindest einem Mobilgerät 51, 52, 53 oder 54, mittels dessen ein Mobilgerät 53 einer Mehrzahl von unterschiedlichen Typen von Mobilgeräten 51, 52, 53 oder 54 über eine bluetoothartige Verbindung 63 bedienbar und mit der Universalschnittstelle bzw. der Freisprecheinrichtung 16 bzw. der Mobilgerätsteuerung 17 verbindbar ist. Dazu ist der Adapter 40 in einer möglichen Ausgestaltung - wie in Fig. 3 dargestellt - in die Universalschnittstelle 30 einzustecken. Es kann darüber hinaus vorgesehen sein, dass mittels des Adapters 40 im eingesteckten Zustand ein weiteres Mobilgerät 54 einer Mehrzahl von unterschiedlichen Typen von Mobilgeräten 51, 52, 53 oder 54 über eine Bluetoothartige Verbindung 64 bedienbar ist und mit der Universalschnittstelle 30 bzw. der Freisprecheinrichtung 16 bzw. der Mobilgerätsteuerung 17 verbindbar ist. Auch das Mobilgerät 51 oder das Mobilgerät 52 sind mit mittels des Adapters 40 über eine nicht dargestellte bluetoothartige Verbindung bedienbar und mit der Universalschnittstelle bzw. der Freisprecheinrichtung 16 bzw. der Mobilgerätsteuerung 17 verbindbar ist.

Es kann vorteilhafterweise vorgesehen sein, dass die datentechnische Verbindung zwischen dem Adapter 40 und der Freisprecheinrichtung 16 bzw. dem Kraftfahrzeug 2 bzw. der Mobilgerätsteuerung 17 auch über eine weitere bluetoothartige Verbindung 65 erfolgt. In diesem Falle erfolgt lediglich die Energieversorgung des Adapters 40 und/oder die Übertragung eines Identifizierungssignals im eingesteckten Zustand, wie er in Fig. 3 dargestellt ist, über die Universalschnittstelle 30. In dieser Ausgestaltung ist vorgesehen, dass mittels des Adapters 40 im eingesteckten und nicht eingesteckten Zustand ein Mobilgerät 53 aus einer Mehrzahl von unterschiedlichen Typen von Mobilgeräten und ein Mobilgerät 54 aus einer Mehrzahl von unterschiedlichen Typen von Mobilgeräten über eine bluetoothartige Verbindung 63 bzw. 64 bedienbar ist und über die weitere bluetoothartige Verbindung zwischen dem Adapter 40 und dem Kraftfahrzeug 2 mit der Freisprecheinrichtung 16 bzw. der Mobilgerätsteuerung 17 verbindbar ist.

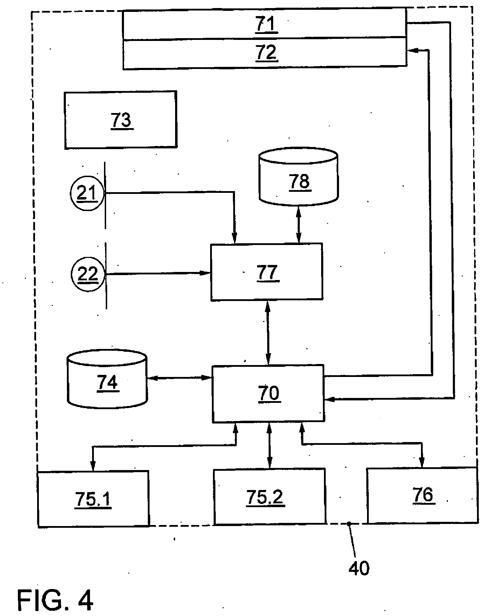

Fig. 4 zeigt den Adapter 40 zur drahtlosen Kommunikation mit zumindest einem Mobilgerät 51, 52, 53 oder 54 in einer Prinzipdarstellung. Der Adapter 40 umfasst einen Akku 73, einen Speicher 74 zum Speichern von Daten sowie eine CPU 70, mittels der ein Display 72 ansteuerbar ist und mittels dessen Eingangssignale eines über dem Display 72 angeordneten Touchscreens 71 auswertbar sind. Darüber hinaus umfasst der Adapter 40 eine elektrische Schnittstelle 76 zum elektrischen Verbinden mit der Universalschnittstelle 30 sowie zum Datenaustausch mit der Universalschnittstelle 30 oder zur Übertragung des Identifizierungssignals. Über die Schnittstelle 76 kann insbesondere die Freisprecheinrichtung 16 benutzt oder bedient werden. Darüber hinaus umfasst der Adapter 40 eine bluetoothartige Schnittstelle 75.1, mittels der die bluetoothartigen Verbindungen 63 und 64 implementiert werden können. Darüber hinaus ist eine weitere bluetoothartige Schnittstelle 75.2 vorgesehen, mittels der die bluetoothartige Verbindung 65 implementiert werden kann. Die bluetoothartige Schnittstelle 75.1 und die bluetoothartige Schnittstelle 75.2 sind vorteilhafterweise unterhalb der Anwendungsschicht ein und dieselbe Schnittstelle, jedoch in der Anwendungsschicht zwei Schnittstellen.

Zudem umfasst der Adapter 40 zur drahtlosen Kommunikation mit zumindest einem Mobilgerät 51, 52, 53 oder 54 ein Spracherkennungssystem 77, zur Identifizierung von Sprachbefehlen aus akustischen Signalen, die über mindestens zwei in den Adapter 40 integrierten Mikrofonen 21 und 22 eingegeben werden. Im Spracherkennungssystem 77 ist darüber hinaus ein Speicher 78 zugeordnet.

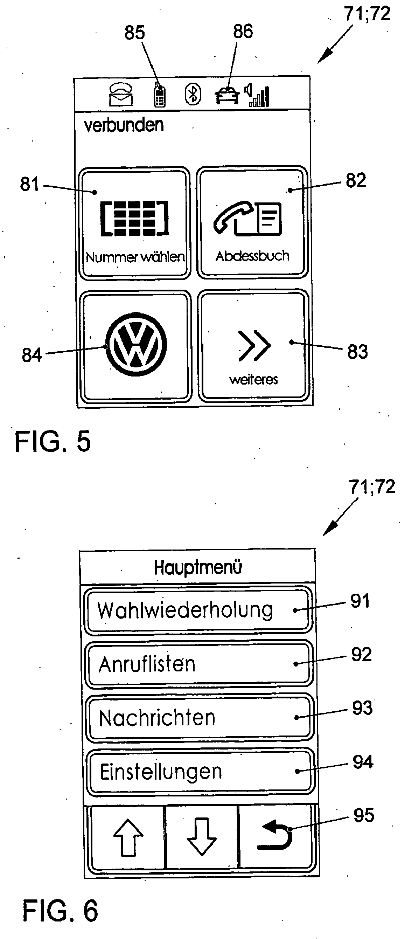

Mittels des in die Universalschnittstelle 30 eingesteckten Adapters 40 zur drahtlosen Kommunikation mit zumindest einem Mobilgerät 51, 52, 53 oder 54 und der bluetoothartigen Verbindung 63 kann das Mobilgerät 53 mit der Freisprecheinrichtung 16 verbunden werden. Darüber hinaus kann das Mobilgerät 53 über die bluetoothartige Verbindung 63 mittels des Adapters 40 bzw. dessen Touchscreens 71 in Verbindung mit dem Display 72 - wie beispielhaft in Fig. 5, Fig. 6 und Fig. 7 dargestellt - bedient bzw. benutzt werden. So kann zum Beispiel - wie in Fig. 5 dargestellt - in einem Hauptmenü ein Bedienelement 81 zum Aufrufen einer Bedienmaske mit einer numerischen Tastatur, ein Bedienelement 82 zum Aufruf einer Liste mit gespeicherten Telefonnummern, ein Bedienelement 84 zum Aufruf eines Menüs zur Auswahl von Volkswagen-Informationen und Pannenrufnummern sowie ein Bedienelement 83 zum Aufrufen einer in Fig. 6 dargestellten Liste mit einem Bedienelement 91 zur Wahlwiederholung, einem Bedienelement 92 zum Aufruf einer Rufliste, einem Bedienelement 93 zur Anzeige von Textmitteilungen und einem Bedienelement 94 zum Aufruf einer Bedienmaske zur Veränderung von Einstellungen dargestellt werden. Darüber hinaus bietet das in Fig. 6 dargestellte Menü ein Bedienelement 95, welches als Rückkehrtaste ausgebildet ist, mittels dessen ein Rücksprung in das in Fig. 5 dargestellte Menü erfolgen kann. Darüber hinaus wird mittels des Displays 72 eine Statusanzeige 85, die angibt, dass der Adapter 40 mit dem Mobilgerät 53 datentechnisch verbunden ist, und eine Statusanzeige 86 angezeigt, die angibt, dass der Adapter 40 datentechnisch mit dem Kraftfahrzeug bzw. mit der Mobilgerätsteuerung 17 des Kraftfahrzeuges 2 verbunden ist.

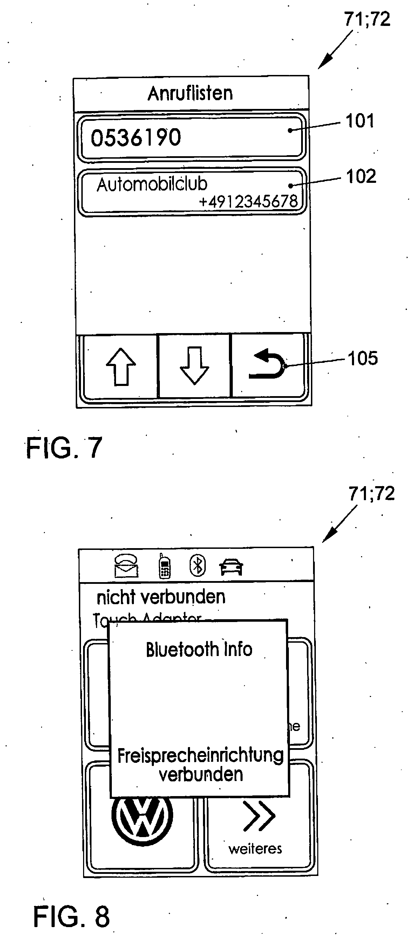

Durch Berühren des Touchscreens 71 im Bereich des Bedienelements 92 wird ein in Fig. 7 dargestelltes Menü zur Darstellung einer Rufliste aufgerufen. Im vorliegenden Ausführungsbeispiel enthält die Liste zwei Einträge 101 und 102. Wird der Touchscreen 71 im Bereich des Eintrags 101 berührt, so wählt das Mobilgerät 53 die Nummer 0536190. Das in Fig. 7 dargestellte Menü umfasst zudem ein Bedienelement 105, welches als Rückkehrtaste ausgebildet ist, zum Rücksprung in das in Fig. 6 dargestellte Menü.

In einer vorteilhaften Ausgestaltung ist ein Mobilgerät 51, 52, 53 oder 54 mittels des Adapters 40 automatisch mit der Freisprecheinrichtung 16 bzw. der Mobilgerätsteuerung 17 verbindbar. Es ist insbesondere vorgesehen, dass die bluetoothartige Verbindung 65 zwischen dem Adapter 40 und der Freisprecheinrichtung 16 bzw. dem Kraftfahrzeug 2 bzw. der Mobilgerätsteuerung 17 automatisch aufgebaut wird, wenn der Adapter 40 eingeschaltet ist und der Zündschlüssel des Kraftfahrzeuges 2 gedreht ist oder das Kraftfahrzeug 2 gestartet ist. Ist z.B. der Adapter 40 eingeschaltet während das Kraftfahrzeug 2 gestartet wird, baut sich die bluetoothartige Verbindung 65 zwischen dem Adapter 40 und der Freisprecheinrichtung 16 bzw. dem Kraftfahrzeug 2 bzw. der Mobilgerätsteuerung 17 auf. Ist die Bluetoothartige Verbindung 65 zwischen dem Adapter 40 und der Freisprecheinrichtung 16 bzw. dem Kraftfahrzeug 2 bzw. der Mobilgerätsteuerung 17 aufgebaut, so wird dies mittels des Displays angezeigt bzw. bestätigt. Eine solche Bestätigung ist in Fig. 8 dargestellt. Anschließend wird die bluetoothartige Verbindung 63 zwischen dem Mobilgerät 53 und dem Adapter 40 aufgebaut.

### Bezugszeichenliste

- 1: Mobilgerätsystem
- 2: Kraftfahrzeug
- 10: Anzeige- und Bediensteuerung
- 11: Anzeige- und Bedienvorrichtung
- 12: Navigationssystem
- 13: Klimaautomatik
- 14: CD-Spieler
- 15: Radio
- 16: Freisprecheinrichtung
- 17: Mobilgerätsteuerung
- 19: Bussystem
- 21,22,162: Mikrofon
- 30: Universalschnittstelle
- 40: Adapter zur drahtlosen Kommunikation mit zumindest einem Mobilgerät
- 41,42: Adapter
- 51, 52, 53, 54: Mobilgerät
- 63, 64, 65: Bluetoothartige Verbindung
- 70: CPU
- 71: Touchscreen
- 72: Display
- 73: Akku
- 74,78: Speicher
- 75.1, 75.2: bluetoothartige Schnittstelle
- 76: Schnittstelle
- 77: Spracherkennungssystem
- 81, 82, 83, 84, 91, 92, 93, 94, 95, 105: Bedienelement
- 85, 86: Statusanzeige
- 101, 102: Eintrag
- 161: Lautsprecher

## Patentansprüche

1. Mobilgerätsystem (1) für ein Kraftfahrzeug (2) mit einer kraftfahrzeugseitigen Universalschnittstelle (30) zum zumindest mechanischen Verbinden zumindest eines ersten Adapters (41, 42) mit dem Kraftfahrzeug (2), wobei der mindestens erste Adapter (41, 42) zum zumindest mechanischen Verbinden eines Mobilgeräts (51, 52) eines vorgegebenen oder vorgebbaren Mobilgerätetyps mit der Universalschnittstelle (30) ausgestaltet ist, und wobei das Mobilgerätsystem (1) einen mit der Universalschnittstelle (30) mechanisch verbindbaren Adapter (40) zur drahtlosen Kommunikation mit zumindest einem Mobilgerät (53, 54) aufweist, mittels dessen zumindest ein Mobilgerät (53, 54) aus einer Mehrzahl von unterschiedlichen Typen von Mobilgeräten über eine erste bluetoothartige Verbindung (63, 64) bedienbar ist oder bedient wird und/oder mit der Universalschnittstelle (30) verbindbar oder verbunden ist, **dadurch gekennzeichnet, dass** der Adapter (40) zur drahtlosen Kommunikation mit zumindest einem Mobilgerät (53, 54) mit dem Kraftfahrzeug (2) mittels einer zweiten bluetoothartigen Verbindung (65) verbindbar oder verbunden ist.

2. Mobilgerätsystem (1) nach Anspruch 1, **dadurch gekennzeichnet, dass** mittels der ersten bluetoothartigen Verbindung (63, 64) und der zweiten bluetoothartigen Verbindung (65) Daten zur gleichen Zeit übertragbar sind oder übertragen werden.

3. Mobilgerätsystem (1) nach einem der vorhergehenden Ansprüche, **dadurch gekennzeichnet, dass** das Mobilgerätsystem (1) eine kraftfahrzeugseitige Freisprecheinrichtung (16) umfasst, die mittels des Adapters (40) zum Telefonieren mit dem zumindest einen Mobilgerät (53, 54) nutzbar ist oder genutzt wird.

4. Mobilgerätsystem (1) nach Anspruch 3, **dadurch gekennzeichnet, dass** zumindest ein Mobilgerät (53, 54) mittels des Adapters (40) automatisch mit der Freisprecheinrichtung (16) verbindbar oder verbunden ist.

5. Mobilgerätsystem (1) nach einem der vorhergehenden Ansprüche, **dadurch gekennzeichnet, dass** der Adapter (40) zur drahtlosen Kommunikation mit zumindest einem Mobilgerät ein Display (72) umfasst.

6. Mobilgerätsystem (1) nach einem der Ansprüche 1 bis 4, **dadurch gekennzeichnet, dass** der Adapter (40) zur drahtlosen Kommunikation mit zumindest einem Mobilgerät ein Display (72) und einen über dem Display (72) angeordneten Touchscreen (71) umfasst.

7. Mobilgerätsystem (1) nach Anspruch 6, **dadurch gekennzeichnet, dass** mittels des Touchscreens (71) zumindest eine Funktion des Mobilgeräts (53, 54) anzeigbar ist oder angezeigt wird und/oder auswählbar ist oder ausgewählt wird und/oder aus einer mittels des Displays (72) dargestellten Liste auswählbar ist.

8. Mobilgerätsystem (1) nach einem der vorhergehenden Ansprüche, **dadurch gekennzeichnet, dass** die Universalschnittstelle (30) als Haltevorrichtung für den Adapter (40) zur drahtlosen Kommunikation mit zumindest einem Mobilgerät und den zumindest einen ersten Adapter (41, 42) ausgestaltet ist.

9. Adapter (40) für ein Mobilgerätsystem (1), wobei das Mobilgerätsystem (1) eine kraftfahrzeugseitige Universalschnittstelle (30) zum zumindest mechanischen Verbinden zumindest eines ersten Adapters (41, 42) mit einem Kraftfahrzeug (2) aufweist, wobei der mindestens erste Adapter (41, 42) zum zumindest mechanischen Verbinden eines Mobilgeräts (51, 52) eines vorgegebenen oder vorgebbaren Typs von Mobilgeräten mit der Universalschnittstelle (30) ausgestaltet ist, und wobei mittels des Adapters (40) zumindest ein Mobilgerät (53, 54) aus einer Mehrzahl von unterschiedlichen Typen von Mobilgeräten über eine erste bluetoothartige Verbindung (63, 64) bedienbar ist oder bedient wird und/oder mit der Universalschnittstelle (30) verbindbar ist oder verbunden ist **dadurch gekennzeichnet, dass** der Adapter (40) eine erste bluetoothartige Schnittstelle (75.1) umfasst, die der ersten bluetoothartigen Verbindung (63, 64) zugeordnet ist, und eine zweite bluetoothartige Schnittstelle (75.2) umfasst, die einer zweiten bluetoothartigen Verbindung (65) zugeordnet ist, wobei der Adapter (40) mit dem Kraftfahrzeug (2) mittels der zweiten bluetoothartigen Verbindung (65) verbindbar oder verbunden ist.

10. Adapter (40) nach Anspruch 9, **dadurch gekennzeichnet, dass** der Adapter (40) ein Display (72) umfasst.

11. Adapter (40) nach Anspruch 9, **dadurch gekennzeichnet, dass** der Adapter (40) ein Display (72) und einen über dem Display (72) angeordneten Touchscreen (71) umfasst.

12. Adapter (40) nach Anspruch 11, **dadurch gekennzeichnet, dass** mittels des Touchscreens (71) zumindest eine Funktion des Mobilgeräts (53, 54) anzeigbar ist oder angezeigt wird und/oder auswählbar ist oder ausgewählt wird und/oder aus einer mittels des Displays (72) dargestellten Liste auswählbar ist.

## Claims

1. Mobile device system (1) for a motor vehicle (2) having a motor vehicle universal interface (30) for at least mechanically connecting at least one first adapter (41, 42) to the motor vehicle (2), the at least first adapter (41, 42) being configured to at least mechanically connect a mobile device (51, 52) of a predefined or predefinable mobile device type to the universal interface (30), and the mobile device system (1) having an adapter (40) which can be mechanically connected to the universal interface (30), is intended to wirelessly communicate with at least one mobile device (53, 54) and by means of which at least one mobile device (53, 54) from a plurality of different types of mobile devices can be or is operated via a first Bluetooth-type connection (63, 64) and/or can be or is connected to the universal interface (30), **characterized in that** the adapter (40) for wirelessly communicating with at least one mobile device (53, 54) can be or is connected to the motor vehicle (2) by means of a second Bluetooth-type connection (65).

2. Mobile device system (1) according to Claim 1, **characterized in that** data can be or are transmitted at the same time by means of the first Bluetooth-type connection (63, 64) and the second Bluetooth-type connection (65).

3. Mobile device system (1) according to one of the preceding claims, **characterized in that** the mobile device system (1) comprises a motor vehicle hands-free device (16) which can be or is used to make a telephone call using the at least one mobile device (53, 54) by means of the adapter (40).

4. Mobile device system (1) according to Claim 3, **characterized in that** at least one mobile device (53, 54) can be or is automatically connected to the hands-free device (16) by means of the adapter (40) .

5. Mobile device system (1) according to one of the preceding claims, **characterized in that** the adapter (40) for wirelessly communicating with at least one mobile device comprises a display (72).

6. Mobile device system (1) according to one of Claims 1 to 4, **characterized in that** the adapter (40) for wirelessly communicating with at least one mobile device comprises a display (72) and a touchscreen (71) arranged above the display (72).

7. Mobile device system (1) according to Claim 6, **characterized in that** at least one function of the mobile device (53, 54) can be or is displayed and/or can be or is selected and/or can be selected from a list displayed by means of the display (72) using the touchscreen (71).

8. Mobile device system (1) according to one of the preceding claims, **characterized in that** the universal interface (30) is in the form of a holding apparatus for the adapter (40) for wirelessly communicating with at least one mobile device and for the at least one first adapter (41, 42) .

9. Adapter (40) for a mobile device system (1), the mobile device system (1) having a motor vehicle universal interface (30) for at least mechanically connecting at least one first adapter (41, 42) to a motor vehicle (2), the at least first adapter (41, 42) being configured to at least mechanically connect a mobile device (51, 52) of a predefined or predefinable type of mobile devices to the universal interface (30), and at least one mobile device (53, 54) from a plurality of different types of mobile devices being able to be or being operated via a first Bluetooth-type connection (63, 64) and/or being able to be or being connected to the universal interface (30) by means of the adapter (40), **characterized in that** the adapter (40) comprises a first Bluetooth-type interface (75.1), which is assigned to the first Bluetooth-type connection (63, 64), and a second Bluetooth-type interface (75.2) which is assigned to a second Bluetooth-type connection (65), the adapter (40) being able to be or being connected to the motor vehicle (2) by means of the second Bluetooth-type connection (65).

10. Adapter (40) according to Claim 9, **characterized in that** the adapter (40) comprises a display (72).

11. Adapter (40) according to Claim 9, **characterized in that** the adapter (40) comprises a display (72) and a touchscreen (71) arranged above the display (72) .

12. Adapter (40) according to Claim 11, **characterized in that** at least one function of the mobile device (53, 54) can be or is displayed and/or can be or is selected and/or can be selected from a list displayed by means of the display (72) using the touchscreen (71).

## Revendications

1. Système d'appareil mobile (1) pour un véhicule automobile (2) comprenant une interface universelle (30) du côté du véhicule destinée à la connexion au moins mécanique d'un premier adaptateur (41, 42) avec le véhicule automobile (2), l'au moins un premier adaptateur (41, 42) étant équipé pour la connexion au moins mécanique d'un appareil mobile (51, 52) d'un type d'appareils mobiles prédéfini ou pouvant être prédéfini avec l'interface universelle (30), et le système d'appareil mobile (1) possédant un adaptateur (40) pouvant être connecté mécaniquement avec l'interface universelle (30) et servant à la communication sans fil avec au moins un appareil mobile (53, 54), au moyen duquel au moins un appareil mobile (53, 54) d'une pluralité de types différents d'appareils mobiles peut être commandé ou est commandé par le biais d'une première connexion (63, 64) de type Bluetooth et/ou peut être connecté ou est connecté avec l'interface universelle (30), **caractérisé en ce que** l'adaptateur (40) servant à la communication sans fil avec au moins un appareil mobile (53, 54) peut être connecté ou est connecté avec le véhicule automobile (2) au moyen d'une deuxième connexion (65) de type Bluetooth.

2. Système d'appareil mobile (1) selon la revendication 1, **caractérisé en ce que** des données peuvent être transmises ou sont transmises au même moment au moyen de la première connexion (63, 64) de type Bluetooth et de la deuxième connexion (65) de type Bluetooth.

3. Système d'appareil mobile (1) selon l'une des revendications précédentes, **caractérisé en ce que** le système d'appareil mobile (1) comprend un appareil de conversation mains libres (16) du côté du véhicule qui, au moyen de l'adaptateur (40), peut être utilisé ou est utilisé pour téléphoner avec l'au moins un appareil mobile (53, 54).

4. Système d'appareil mobile (1) selon la revendication 3, **caractérisé en ce qu'**au moins un appareil mobile (53, 54) peut être connecté ou est connecté automatiquement à l'appareil de conversation mains libres (16) au moyen de l'adaptateur (40).

5. Système d'appareil mobile (1) selon l'une des revendications précédentes, **caractérisé en ce que** l'adaptateur (40) servant à la communication sans fil avec au moins un appareil mobile comprend un dispositif d'affichage (72).

6. Système d'appareil mobile (1) selon l'une des revendications 1 à 4, **caractérisé en ce que** l'adaptateur (40) servant à la communication sans fil avec au moins un appareil mobile comprend un dispositif d'affichage (72) et un écran tactile (71) disposé au-dessus du dispositif d'affichage (72).

7. Système d'appareil mobile (1) selon la revendication 6, **caractérisé en ce qu'**au moyen de l'écran tactile (71), au moins une fonction de l'appareil mobile (53, 54) peut être affichée ou est affichée et/ou peut être sélectionnée ou est sélectionnée et/ou peut être sélectionnée dans une liste représentée au moyen du dispositif d'affichage (72) .

8. Système d'appareil mobile (1) selon l'une des revendications précédentes, **caractérisé en ce que** l'interface universelle (30) est configurée sous la forme d'un dispositif de maintien pour l'adaptateur (40) servant à la communication sans fil avec au moins un appareil mobile et pour l'au moins un premier adaptateur (41, 42).

9. Adaptateur (40) pour un système d'appareil mobile (1), le système d'appareil mobile (1) possédant une interface universelle (30) du côté d'un véhicule destinée à la connexion au moins mécanique d'un premier adaptateur (41, 42) avec un véhicule automobile (2), l'au moins un premier adaptateur (41, 42) étant équipé pour la connexion au moins mécanique d'un appareil mobile (51, 52) d'un type d'appareils mobiles prédéfini ou pouvant être prédéfini avec l'interface universelle (30) et, au moyen de l'adaptateur (40), au moins un appareil mobile (53, 54) d'une pluralité de types différents d'appareils mobiles pouvant être commandé ou étant commandé par le biais d'une première connexion (63, 64) de type Bluetooth et/ou pouvant être connecté ou étant connecté avec l'interface universelle (30), **caractérisé en ce que** l'adaptateur (40) comprend une première interface (75.1) de type Bluetooth qui est associée à une première connexion (63, 64) de type Bluetooth et comprend une deuxième interface (75.2) de type Bluetooth qui est associée à une deuxième connexion (65) de type Bluetooth, l'adaptateur (40) pouvant être connecté ou étant connecté avec le véhicule automobile (2) au moyen d'une deuxième connexion (65) de type Bluetooth.

10. Adaptateur (40) selon la revendication 9, **caractérisé en ce que** l'adaptateur (40) comprend un dispositif d'affichage (72).

11. Adaptateur (40) selon la revendication 9, **caractérisé en ce que** l'adaptateur (40) comprend un dispositif d'affichage (72) et un écran tactile (71) disposé au-dessus du dispositif d'affichage (72).

12. Adaptateur (40) selon la revendication 11, **caractérisé en ce qu'**au moyen de l'écran tactile (71), au moins une fonction de l'appareil mobile (53, 54) peut être affichée ou est affichée et/ou peut être sélectionnée ou est sélectionnée et/ou peut être sélectionnée dans une liste représentée au moyen du dispositif d'affichage (72).
